(19) Europäisches Patentamt
European Patent Office
Office européen des brevets

(11) **EP 2 624 173 B1**

(12) **EUROPEAN PATENT SPECIFICATION**

(45) Date of publication and mention of the grant of the patent:
**14.12.2016 Bulletin 2016/50**

(51) Int Cl.:
***G06K 9/46*** (2006.01)      ***G06T 7/00*** (2006.01)

(21) Application number: **13152562.8**

(22) Date of filing: **24.01.2013**

(54) **Permeability based saliency map extraction method**

Verfahren zur Extraktion einer Salienzkarte auf Basis von Durchlässigkeit

Procédé pour l'extraction d'une carte de saillance sur la base de la perméabilité

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.02.2012 TR 201201292**

(43) Date of publication of application:
**07.08.2013 Bulletin 2013/32**

(73) Proprietor: **Vestel Elektronik Sanayi ve Ticaret A.S.
45030 Manisa (TR)**

(72) Inventor: **Cigla, Cevahir
45030 Manisa (TR)**

(74) Representative: **Cayli, Hülya
Paragon Consultancy Inc.
Koza Sokak No: 63/2
GOP
06540 Ankara (TR)**

(56) References cited:
- HANLI ZHAO ET AL: "Real-time saliency-aware video abstraction", THE VISUAL COMPUTER ; INTERNATIONAL JOURNAL OF COMPUTER GRAPHICS, SPRINGER, BERLIN, DE, vol. 25, no. 11, 15 January 2009 (2009-01-15), pages 973-984, XP019759192, ISSN: 1432-2315, DOI: 10.1007/S00371-008-0308-Y

- CEVAHIR CIGLA ET AL: "Efficient edge-preserving stereo matching", COMPUTER VISION WORKSHOPS (ICCV WORKSHOPS), 2011 IEEE INTERNATIONAL CONFERENCE ON, IEEE, 6 November 2011 (2011-11-06), pages 696-699, XP032095312, DOI: 10.1109/ICCVW.2011.6130315 ISBN: 978-1-4673-0062-9

- Jan Eric Kyprianidis ET AL: "Image Abstraction by Structure Adaptive Filtering", EG UK Theory and Practice of Computer Graphics, 1 January 2008 (2008-01-01), XP055180176, DOI: 10.2312/LocalChapterEvents/TPCG/TPCG08/051-058 Retrieved from the Internet: URL:http://dx.doi.org/10.2312/LocalChapterEvents/TPCG/TPCG08/051-058 [retrieved on 2015-03-31]

- JUN XIE ET AL: "Image Diffusion Using Saliency Bilateral Filter", IEEE TRANSACTIONS ON INFORMATION TECHNOLOGY IN BIOMEDICINE, IEEE SERVICE CENTER, LOS ALAMITOS, CA, US, vol. 12, no. 6, 1 November 2008 (2008-11-01), pages 768-771, XP011227583, ISSN: 1089-7771, DOI: 10.1109/TITB.2008.926462

- HOLGER WINNEMÖLLER: "XDoG", PROCEEDINGS OF THE ACM SIGGRAPH/EUROGRAPHICS SYMPOSIUM ON NON-PHOTOREALISTIC ANIMATION AND RENDERING, NPAR '11, 1 January 2011 (2011-01-01), page 147, XP055180235, New York, New York, USA DOI: 10.1145/2024676.2024700 ISBN: 978-1-45-030907-3

## Description

### Technical Field

The present invention is related to a novel saliency map extraction method based on the concept of permeability among pixels of an image.

### Prior Art

Image processing techniques are widely utilized in recent technological systems, ranging from biomedical systems to industrial appliances and/or high-end user applications. Most of the image processing techniques are solely dependent on single image information, which usually comprises colour and/or intensity values of each pixel of the image. Since the compactness of the image data is generally one of the priorities in most of the applications, no matter which information the processing technique requires, usage of any additional image information is generally avoided.

Most of the image processing techniques are therefore based on the stated colour and/or intensity information. However, as well as this colour and/or intensity information, the information about the nature of objects in the image plays a very important role in image processing applications. Especially in successive image processing systems (video processing systems) lots of attributes of the objects, such as the position in the image, the significance of the object, the movement of the object among consecutive images, are crucial for image processing applications.

Saliency has been a widely used concept in image processing applications for years. Saliency is the numerical or mathematical definition of how much attractive an object is in an image when compared to its surroundings. Many image processing applications utilize saliency maps extracted from the image colour and/or intensity information. The saliency is especially important when limited processing power is available for the processing application. In such cases, saliency map determines which areas of an image should be processed in detail and which areas of an image should be processed roughly or even not processed. Therefore, extraction of an accurate saliency map plays an important role in image processing applications for satisfactory results.

Several techniques and algorithms are developed to extract saliency map of an image. Most of the techniques are based on processing depth map of an image and extracting a saliency map using depth information. However, most of the known saliency map extraction techniques lack determination of object boundaries and transition at those boundaries. Hence the exact saliency mapping cannot be done and use of inexact saliency map leads disturbing image outputs in the image processing applications.

The prior art document US 2008/304742 A1 provides a saliency map extraction method for image processing applications in which multiple cues of a pixel's status are weighed and statistically combined into a saliency map and thresholding combined information to discriminate between foreground and background objects. However stated method is also incapable of determining object boundaries and boundary transitions since the method depends on pixel information itself.

Another prior art is HANLI ZHAO ET AL: "Real-time saliency-aware video abstraction",THE VISUAL COMPUTER ; INTERNATIONAL JOURNAL OF COMPUTER GRAPHICS, SPRINGER, BERLIN, DE, vol. 25, no. 11, 15 January 2009 (2009-01-15), pages 973-984,

### Brief Description of the Invention

Present invention discloses a saliency map extraction method for an image which utilizes permeability concept for pixels of an image. The permeability concept defines information transfer rate among neighbouring pixels of an image. A permeability function is defined which updates intensities of pixels using the intensities of neighbouring pixels and permeability of neighbouring pixels towards pixel of concern. Use of permeability preserves edge transition characteristics of the image and performs an edge - aware filtering. A permeability adjustment constant defines the strength of permeability function and therefore centre - surround differences are obtained by differencing permeability functions of the image calculated using different values of permeability adjustment characteristics. Finally saliency map is obtained by summing all obtained centre - surround differences.

The method of the invention enables extraction of an accurate saliency map since the basis of the method is an edge aware filtering. Therefore the edge transition characteristics of the image are transferred to the saliency map. Furthermore, while increasing the saliency accuracy, the computational complexity is kept low so as to be used in various image processing applications.

### Object of the Invention

The object of the invention is to provide method for saliency map extraction of an image.

Another object of the invention is to provide a saliency map extraction method which preserves edge transition characteristics of an image on the saliency map.

Another object of the invention is to provide a saliency map extraction method with low computational complexity.

Another object of the invention is to provide an easily applicable saliency map extraction method.

## Description of the Drawings

Figure 1 shows a pixel, neighbouring pixels and permeability directions from said pixel to said neighbouring pixels on an image.

Figure 2 shows left to right update operation of pixels.

Figure 3 shows right to left update operations of pixels.

Figure 4 shows top to bottom update operations of pixels.

Figure 5 shows bottom to top update operations of pixels.

Figure 6 shows a block diagram of a system using the method of the present invention.

The reference numbers as used in figures may possess the following meanings.

| | |
|---|---|
| Upward Left Direction | (UL) |
| Upward Direction | (U) |
| Upward Right Direction | (UR) |
| Left Direction | (L) |
| Right Direction | (R) |
| Downward Left Direction | (DL) |
| Downward Direction | (D) |
| Downward Right Direction | (DR) |
| Left to Right Direction | (LR) |
| Right to Left Direction | (RL) |
| Top to Bottom Direction | (TB) |
| Bottom to Top Direction | (BT) |
| Pixel of Concern | $P(x, y)$ |
| Up Left Neighbouring Pixel | $P(x-1, y-1)$ |
| Left Neighbouring Pixel | $P(x-1, y)$ |
| Down Left Neighbouring Pixel | $P(x-1, y+1)$ |
| Up Neighbouring Pixel | $P(x, y-1)$ |
| Down Neighbouring Pixel | $P(x, y+1)$ |
| Up Right Neighbouring Pixel | $P(x+1, y-1)$ |
| Right Neighbouring Pixel | $P(x+1, y)$ |
| Down Right Neighbouring Pixel | $P(x+1, y+1)$ |
| Permeability Function Means | (1) |
| Normalizing Means | (2) |
| Center Surround Difference Calculating Means | (3) |
| Summing Means | (4) |

## Detailed Description of the Invention

Saliency concept is widely used and popular in the area of image & video processing due to its advantages in especially reducing computational complexity. When an image is being processed, if saliency information is available, that is if the processor knows which regions of the processed image is important in terms of attractiveness of the viewer, the processing may be tuned so as to process the attractive, in other words salient, regions in detail and reduce computations (i.e. using approximations, less instructions, low number of passes) in less attractive, or less salient, regions.

Known techniques for saliency map extraction may use several information of the image and process the intensity values of pixels of an image. The main disadvantage of most of the saliency map algorithms known in the art is the fact that none of the algorithms is able to determine edge information, which is crucial for realizing separate objects on an image. Objects on an image will have boundaries and these boundaries naturally should be mapped on the saliency map since boundaries between regions have different saliencies. Hence an edge aware saliency map extraction method is needed for accurate saliency map of an image.

The method of the present invention enables an edge aware filtering and an edge aware saliency map extraction using the concept of permeability, which is widely used in biomedical engineering.

Permeability is the mathematical modelling of molecule transfer behaviour of cell membranes. The permeability models the rate of transition of a molecule through cell membrane relating to difference of concentrations of said molecule on both sides of the membrane.

Permeability concept may as well be applied among pixels of an image as follows. Since pixel information generally consist of three distinct information, which are intensities of red, green and blue, the permeability among two pixels can be related to the difference between of red, green and blue intensities of pixels.

Therefore in accordance with the method of the invention, a permeability value is defined between each neighbouring two pixels of an image which is at least inversely related to difference of at least one of the intensity values of the pixels, wherein said definition comprises at least one permeability adjustment constant ($\sigma$) which is independent of intensity values. This permeability information is preferably defined as follows; if two pixels are defined as $P_1$ and $P_2$ and their colour values are defined as; $R(P_1)$ and $R(P_2)$ for red intensities, $G(P_1)$ and $G(P_2)$ for green intensities and $B(P_1)$ and $B(P_2)$ for blue intensities; colour differences can be simply defined as in equations (1 - 3);

$$\Delta R = | R(P_1) - R(P_2) | \tag{1}$$

$$\Delta G = | G(P_1) - G(P_2) | \tag{2}$$

$$\Delta B = | B(P_1) - B(P_2) | \tag{3}$$

Here $\Delta R$, $\Delta G$ and $\Delta B$ define red intensity difference, green intensity difference and blue intensity difference of said two pixels ($P_1$ and $P_2$) respectively. Having the information of intensity differences among two pixels $P_1$ and $P_2$, a permeability of information can be defined related to intensity differences as in equation (4);

$$\mu = \min(e^{-\Delta R/\sigma}, e^{-\Delta G/\sigma}, e^{-\Delta B/\sigma}) \tag{4}$$

In the equation (4), $\mu$ defines permeability, $\sigma$ defines a permeability adjustment constant and min() defines the minimum function. The permeability equation for intensities relates the permeability of information exponentially and inversely to the intensity difference among pixels. In other words, the more the intensity difference among pixels is, the less the information passage between pixels is. The permeability among two pixels can be adjusted using permeability adjustment constant ($\sigma$). The permeability may vary between zero and unity wherein zero permeability means no information passage occurs and unity permeability means all of the information is passed.

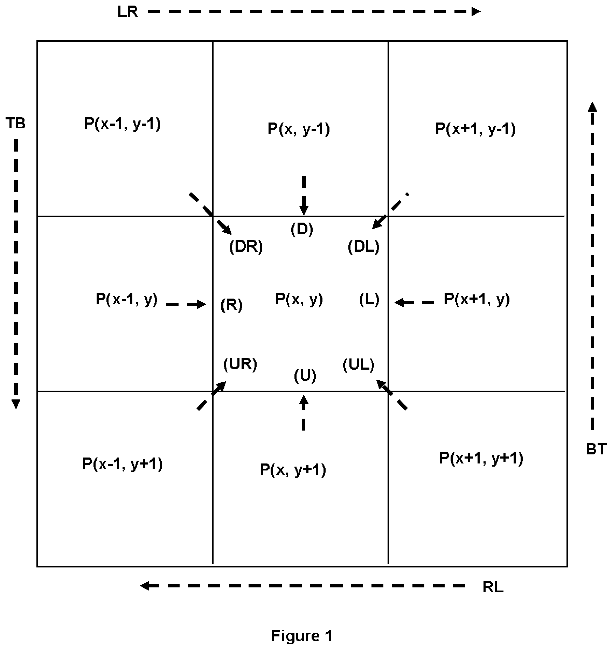

A group of pixels comprising a pixel of concern $P(x, y)$ at the coordinates $(x, y)$ and neighbouring pixels $P(x-1, y-1)$, $P(x, y-1)$, $P(x+1, y-1)$, $P(x-1, y)$, $P(x+1, y)$, $P(x-1, y+1)$, $P(x, y+1)$, $P(x+1, y+1)$ of said pixel of concern $P(x, y)$ is shown in figure 1. Since the pixel of concern has 8 neighbouring pixels ($P(x-1, y-1)$, $P(x, y-1)$, $P(x+1, y-1)$, $P(x-1, y)$, $P(x+1, y)$, $P(x-1, y+1)$, $P(x, y+1)$, $P(x+1, y+1)$) at coordinates $(x-1, y-1)$, $(x, y-1)$, $(x+1, y-1)$, $(x-1, y)$, $(x+1, y)$, $(x-1, y+1)$, $(x, y+1)$, $(x+1, y+1)$, 8 different permeability ($\mu^{UL}$, $\mu^{U}$, $\mu^{UR}$, $\mu^{L}$, $\mu^{R}$, $\mu^{DL}$, $\mu^{D}$, $\mu^{DR}$) can be defined in 8 directions as; upward left direction (UL), upward direction (U), upward right direction (UR), left direction (L), right direction (R), downward left direction (DL), downward direction (D) and downward right direction (DR) respectively. Those permeability values define how much of the intensity information of the pixel of concern will be passed to the neighbouring pixels in the direction of defined permeability.

Stated permeability values ($\mu$) basically define how much of the intensity of a pixel should be added to a neighbouring pixel of itself. This operation, which is also called as "Permeability Function" (PF(I(x, y))) of the image, creates a pixel map in which each pixel intensity value is updated such that intensity of a pixel of concern ($P(x, y)$) is increased by a ratio (preferably a predefined ratio) of neighbouring pixels times permeability ($\mu$) of the neighbouring pixel to the pixel of concern ($P(x, y)$). The intensity information of each pixel is consequently updated by passing intensity information from the neighbouring pixels of each pixel. For information passage, preferably four directions, left to right (LR), right to left (RL), top to bottom (TB) and bottom to top (BT), along the image are used in sequence. The information passage is preferably conducted in a recursive manner, wherein update operation starts preferably from the most up left pixel (0, 0).

The update operation, which can also be stated as "Permeability Function" of an image (PF(I(x, y))), preferably comprises two update sub-operations; horizontal update and vertical update, in accordance with an embodiment of the invention. First, horizontal update is conducted both in left to right (LR) and right to left (RL) directions as given in equations (5, 6);

$$
\begin{aligned}
LRsum(x, y) = {} & I(x, y) \\
& + \frac{1}{3}(LRsum(x-1, y-1) * \mu^{DR}(x-1, y-1) \\
& + LRsum(x-1, y) * \mu^{R}(x-1, y) \\
& + LRsum(x-1, y+1) * \mu^{UR}(x-1, y+1))
\end{aligned}
\tag{5}
$$

$$
\begin{aligned}
RLsum(x, y) = {} & I(x, y) \\
& + \frac{1}{3}(RLsum(x+1, y-1) * \mu^{DL}(x-1, y-1) \\
& + RLsum(x+1, y) * \mu^{L}(x+1, y) \\
& + RLsum(x+1, y+1) * \mu^{UL}(x+1, y+1))
\end{aligned}
\tag{6}
$$

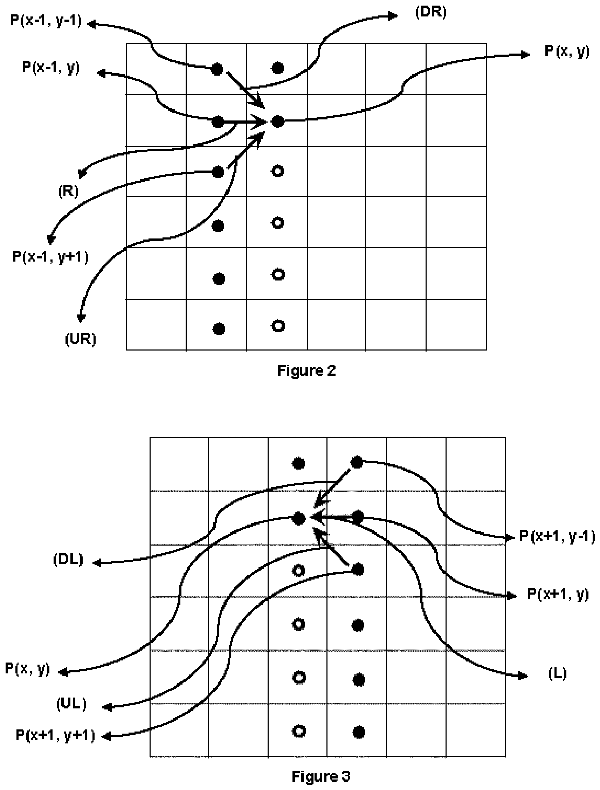

In the update equation (5), LRSum(x, y) defines left-to-right updated intensity value of pixel of concern (P(x, y)), which is also shown in figure 2, I(x, y) defines original intensity of said pixel of concern (P(x, y)), LRSum(x-1, y-1) defines left-to-right updated intensity value of up left neighbouring pixel of pixel of concern (P(x-1, y-1)), $\mu^{DR}$(x-1, y-1) defines permeability of up left neighbouring pixel (P(x-1, y-1)) of pixel of concern (P(x, y)) in downward-right direction (DR) (from the neighbouring pixel itself to the pixel of concern), LRSum(x-1, y) defines left-to-right updated intensity value of left neighbouring pixel (P(x-1, y)) of pixel of concern (P(x, y)), $\mu^{R}$(x-1, y) defines permeability of left neighbouring pixel (P(x-1, y)) of pixel of concern (P(x, y)) in right direction (R) (from the neighbouring pixel itself to the pixel of concern), LRSum(x-1, y+1) defines left-to-right updated intensity value of down left neighbouring pixel (P(x-1, y+1)) of pixel of concern (P(x, y)) and $\mu^{UR}$(x-1, y+1) defines permeability of down left neighbouring pixel (P(x-1, y+1)) of pixel of concern (P(x, y)) in upward-right direction (UR) (from the neighbouring pixel itself to the pixel of concern). In other words, left to right updated intensity of a pixel of concern (P(x, y)) is the sum of the original intensity of the pixel (P(x, y)) plus one third of product of intensity of each left neighbouring pixel (P(x-1,y-1), P(x-1, y), P(x-1, y+1)) of said pixel (P(x, y)) and permeability of each neighbouring pixel ($\mu^{DR}$(x-1, y-1), $\mu^{R}$(x-1, y-1), $\mu^{UR}$(x-1, y-1)) towards pixel of concern.

Similarly in the update equation (6), RLSum(x, y) defines right-to-left updated intensity value of pixel of concern (P(x, y)), which is also given in figure 3, I(x, y) defines original intensity of said pixel of concern (P(x, y), RLSum(x+1, y-1) defines right-to-left updated intensity value of up right neighbouring pixel (P(x+1, y-1)) of pixel of concern (P(x, y)), $\mu^{DL}$(x+1, y-1) defines permeability of up right neighbouring pixel (P(x+1, y-1)) of pixel of concern (P(x, y)) in downward-left direction (DL) (from the neighbouring pixel itself to the pixel of concern), RLSum(x+1, y) defines right-to-left updated intensity value of right neighbouring pixel (P(x+1, y)) of pixel of concern (P(x, y)), $\mu^{L}$(x+1, y) defines permeability of right neighbouring pixel (P(x+1, y)) of pixel of concern (P(x, y)) in the left direction (L) (from the neighbouring pixel itself to the pixel of concern), RLSum(x+1, y+1) defines updated intensity value of down right neighbouring pixel (P(x+1, y+1)) of pixel of concern (P(x, y)) and $\mu^{UL}$(x+1, y+1) defines permeability of down right neighbouring pixel (P(x+1, y+1)) of pixel of concern (P(x, y)) in upward-left direction (UL) (from the neighbouring pixel itself to the pixel of concern).

Here, it can be easily seen that at the boundaries of the image, wherein at least one neighbouring pixel of a pixel of concern (P(x, y)) does not exist, it is convenient to assume either updated intensity or permeability zero so as to have a logical output for all pixels. Known mathematical and/or logical techniques can be used to determine boundaries mathematically (i.e. setting permeability of at least boundary pixel to zero and checking permeability value prior to updated intensity calculation so as to end recursion).

Once the updated intensity information is calculated both in left-to-right (LR) and right-to-left direction (RL), total horizontal updated intensity, which is defined as HorSum(x, y), can be found by simply adding left-to-right updated intensity (LRsum(x, y)) and right-to-left updated intensity (RLsum(x, y)), as shown in equation (7);

$$HorSum(x, y) = LRsum(x, y) + RLsum(x, y) \tag{7}$$

With the calculation of total horizontal updated intensity (HorSum(x, y)), the intensity information of all pixels are updated horizontally using both intensity and permeability information of neighbouring pixels. To further extend the update operation, same operation is conducted vertically, in other words in top-to-bottom direction (TB) and in bottom-to-top (BT) direction.

The vertical update operation is similar to horizontal update operation. However, instead of usage of original intensity value (I(x, y)) of pixel of concern (P(x, y)), vertical update operations use horizontal updated intensity (HorSum(x, y)) as the original intensity of the pixel of concern (P(x, y)). Top-to-bottom and Bottom-to-Top update equations (8, 9) are given as follows;

$$\begin{aligned} TBsum(x, y) = {} & Horsum(x, y) \\ & + \frac{1}{3}(TBsum(x-1, y-1) * \mu^{DR}(x-1, y-1) \\ & + TBsum(x, y-1) * \mu^{D}(x, y-1) \\ & + TBsum(x+1, y-1) * \mu^{DL}(x+1, y-1)) \end{aligned} \tag{8}$$

$$\begin{aligned} BTsum(x, y) = {} & Horsum(x, y) \\ & + \frac{1}{3}(BTsum(x-1, y+1) * \mu^{UR}(x-1, y+1) \\ & + BTsum(x, y+1) * \mu^{U}(x, y+1) \\ & + BTsum(x+1, y+1) * \mu^{UL}(x+1, y+1)) \end{aligned} \tag{9}$$

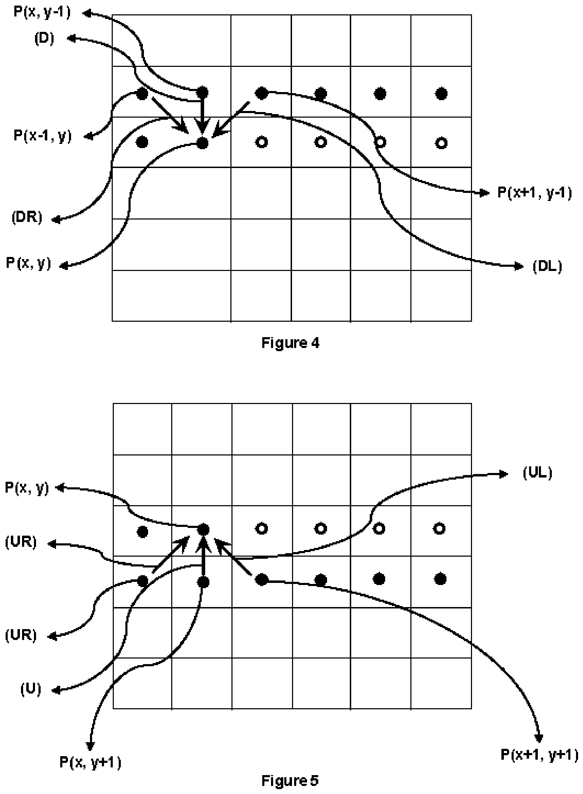

In the equation (8), TBsum(x, y) defines top-to-bottom updated intensity of pixel of concern (P(x, y)), which is also given in figure 4, TBsum(x-1, y-1) defines top-to-bottom updated intensity of up left neighbouring pixel (P(x-1, y-1)) of pixel of concern (P(x, y)), $\mu^{DR}$(x-1, y-1) defines permeability of up left neighbouring pixel (P(x-1, y-1)) of pixel of concern (P(x, y)) in downward right direction (DR), TBsum(x, y-1) defines top-to-bottom updated intensity of up neighbouring pixel (P(x, y-1)) of pixel of concern (P(x, y)), $\mu^{DR}$(x, y-1) defines permeability of up neighbouring pixel (P(x, y-1)) of pixel of concern (P(x, y)) in downward direction (D), TBsum(x+1, y-1) defines top-to-bottom updated intensity of up right neighbouring pixel (P(x+1, y-1)) of pixel of concern (P(x, y)) and $\mu^{DR}$(x+1, y-1) defines permeability of up right neighbouring pixel (P(x-1, y-1)) of pixel of concern (P(x, y)) in downward left direction (DL).

Similarly in the equation (9), BTsum(x, y) defines bottom-to-top updated intensity of pixel of concern (P(x, y)), which is also shown in figure 5, BTsum(x-1, y+1) defines bottom-to-top updated intensity of down left neighbouring pixel (P(x-1, y+1)) of pixel of concern (P(x, y)), $\mu^{UR}$(x-1, y+1) defines permeability of down left neighbouring pixel (P(x-1, y+1)) of pixel of concern (P(x, y)) in upward right direction (UR), BTsum(x, y-1) defines bottom-to-top updated intensity of down neighbouring pixel (P(x, y+1)) of pixel of concern (P(x, y)), $\mu^{U}$(x, y+1) defines permeability of down neighbouring pixel (P(x, y+1)) of pixel of concern (P(x, y)) in upward direction (U), BTsum(x+1, y+1) defines bottom-to-top updated intensity of down right neighbouring pixel (P(x+1, y+1)) of pixel of concern (P(x, y)) and $\mu^{UL}$(x+1, y+1) defines permeability of down right neighbouring pixel (P(x+1, y+1)) of pixel of concern (P(x, y)) in upward left direction (UL).

Once the top-to-bottom and bottom-to-top calculations are completed, the intensity update operation, in other words permeability function (PF(I(x, y))) can be completed by summing the top-to-bottom updated intensity (TBsum(x, y)) and bottom-to-top updated intensity (BTsum(x, y)), resulting in total updated intensity (TotalSum(x, y)), as in equation (10);

$$\begin{aligned} TotalSum(x, y) &= TBsum(x, y) + BTsum(x, y) \\ &= PF(I(x, y)) \end{aligned} \tag{10}$$

To achieve correct mapping of updated intensity values, preferably a normalization operation with total weights (it can be thought as the permeability function of the image intensities of all pixels which are maximum) is conducted.

The normalization operation maps the updated intensity, or permeability function (PF(I(x, y))), of the image to permeability function of the image intensities of all pixels of which are maximum, or in other words consisting of "one's" (PF(1 (x,y))). The normalization operation in accordance with an embodiment of the invention is given in the equation (11);

$$I^F(x, y) = \frac{PF(I(x, y))}{PF(1(x, y))}$$ (11)

In the equation (11), $I^F$(x, y) defines normalized intensity map of the image, and PF(1 (x, y)) defines permeability function of the image intensities of all pixels of which are maximum.

So far, the permeability function (PF(I(x, y))) creates an intensity information of an image, which performs as an edge aware filtering operation. However the function (PF(I(x, y)) is significantly dependent on permeability adjustment constant ($\sigma$), which determines permeability ($\mu$) range over the image. If permeability adjustment constant ($\sigma$) is increased, the permeability function (PF(I(x, y))) smoothens the image. If the permeability adjustment constant ($\sigma$) is decreased, permeability function (PF(I(x, y))) characteristic changes so as to preserve edge characteristics. In other words, if permeability adjustment constant ($\sigma$) is held low, the object boundaries are significant at the output of the permeability function (PF(I(x, y))). This variance of output of permeability function (PF(I(x, y))) can be utilized to obtain a saliency map (SM(x, y)) through Centre - Surround Difference (CSD) for different values of permeability adjustment constant ($\sigma$).

The method of the present invention is conducted as follows; normalized intensity map of the image ($I^F$(x, y)) is calculated using the permeability function (PF(I(x, y))) and normalization equation (11) for successive N values of permeability adjustment constant ($\sigma_1$, $\sigma_2$, $\sigma_3$,... , $\sigma_N$), which are preferably set to 2N for each calculation, as

$$I^F_{\sigma_1}(x, y) , I^F_{\sigma_2}(x, y) , I^F_{\sigma_3}(x, y) , ... , I^F_{\sigma_N}(x, y) \text{ respectively.}$$

The Centre - Surround Difference (CSD) is calculated by differencing two normalized intensity maps of the image ($I^F$(x, y)), which are calculated for different values of permeability adjustment constant ($\sigma$), preferably using the equation (12);

$$CSD^i(x, y) = \left| I^F_{\sigma_i}(x, y) - I^F_{\sigma_{i+j}}(x, y) \right|$$ (12)

In the equation (12), "i" varies between 1 and N -j and j is a positive integer, which can be predefined to adjust sharpness of the Centre - Surround Difference (CSD). Using the equation (12), centre - surround difference of the image (CSD(x, y)) is calculated for different levels and different values of permeability adjustment constant ($\sigma_N$) respectively.

Finally the saliency map of the image (SM(x, y)) is obtained by summing all of the calculated centre surround differences (CSD$^i$(x, y)), as in the equation (13);

$$SM(x, y) = \sum_{i=1}^{N-J} CSD^i(x, y)$$ (13)

In the saliency map of the image (SM(x, y)) which is obtained by the method of the present invention, the higher values in the saliency map (SM(x, y)) corresponds to more salient regions. Since the method utilizes center - surround differences (CSD$^i$(x, y)) for different levels of permeability adjustment constant ($\sigma_N$), the object boundaries or edges are very significant on the saliency map (SM(x, y)) and edge transitions are preserved while obtaining the saliency map from the original image.

The method of the present invention thus extracts a very accurate saliency map (SM(x, y)) while preserving the computational simplicity compared to known techniques (approximately equal to computational complexity of a direct bilinear mapping of a 4 x 4 block for each value of permeability adjustment constant ($\sigma$)). Hence an accurate saliency map extraction can easily be done to be used in various image processing applications such as local dimming systems, image enhancement algorithms.

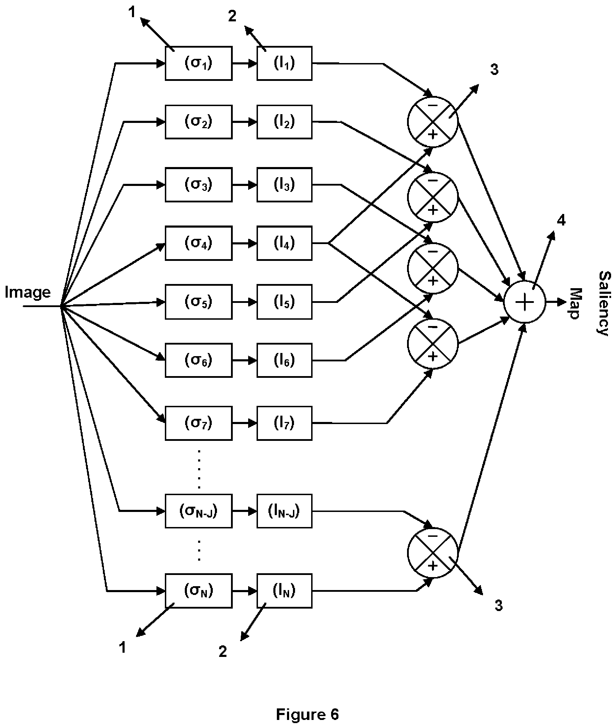

A block diagram of a system using the method of the present invention is given in figure 6. An image is inputted by several permeability function means (1) using successively predetermined permeability adjustment constants ($\sigma_1$, $\sigma_2$, $\sigma_3$, ... , $\sigma_N$). The outputs of the permeability function means (1) are input by normalizing means (2) and the normalized permeability functions of the image are calculated for said permeability adjustment constants ($\sigma_1$, $\sigma_2$, $\sigma_3$,..., $\sigma_N$). Centre - surround difference calculating means (3) calculate centre - surround differences by differencing two different normalized permeability functions, of which permeability adjustments are J apart from each other and wherein J is a positive integer. Summing means (4) consequently calculates saliency map of the image by summing outputs of the centre - surround difference calculating means (3).

Within the method of the present invention, an accurate saliency map (SM(x, y)) of an image can be extracted without any significant disadvantage.

**Claims**

1. A saliency extraction method for an image, which comprises at least a pixel of concern (P(x, y)) and at least one neighbouring pixel to the pixel of concern (P(x, y)), **characterized in that**, the method comprises the steps of;

   - Obtaining normalized intensity map of the image $I^F$(x, y) of said image for successive N values of a permeability adjustment constant ($\sigma_1$, $\sigma_2$, $\sigma_3$, ... , $\sigma_N$), wherein obtaining normalized intensity map of the image $I^F$(x, y) comprises the steps of;

      • defining a permeability value ($\mu$) between each neighbouring two pixels of the image, which is inversely related to difference of at least one of the intensity values of the pixels, wherein said definition comprises at least one permeability adjustment constant ($\sigma$) which is independent of said intensity values, wherein permeability ($\mu$) between two pixels ($P_1$, $P_2$) is calculated using the equation (4)

$$\mu = \min(e^{-\Delta R/\sigma}, e^{-\Delta G/\sigma}, e^{-\Delta B/\sigma}) \qquad (4)$$

      wherein min() defines the minimum function, $\Delta R$, $\Delta G$ and $\Delta B$ define red intensity difference, green intensity difference and blue intensity difference of said two pixels ($P_1$, $P_2$), which are calculated using the formulas (1 - 3);

$$\Delta R = |\, R(P_1) - R(P_2)\,| \qquad (1)$$

$$\Delta G = |\, G(P_1) - G(P_2)\,| \qquad (2)$$

$$\Delta B = |\, B(P_1) - B(P_2)\,| \qquad (3)$$

         ▪ wherein $R(P_1)$ and $R(P_2)$ defines red intensities, $G(P_1)$ and $G(P_2)$ for green intensities and $B(P_1)$ and $B(P_2)$ for blue intensities of said two pixels ($P_1$, $P_2$) respectively;

      • creating a permeability function (PF(I(x, y))) of the image by increasing intensity of each pixel of concern (P(x, y)) by a ratio of intensity of the neighbouring pixels times permeability ($\mu$) of the neighbouring pixel to the pixel of concern (P(x, y)) wherein creating a permeability function (PF(I(x, y))) comprises the steps of conducting a horizontal update operation for all pixels of concern (P(x, y)) and conducting a vertical update operation for each pixel of concern (P(x, y)) and wherein

         ▪ the step of conducting a horizontal update operation for all pixels of concern (P(x, y)) comprises the steps of; conducting a horizontal update operation for all pixels of concern (P(x, y)) of said image using the equations (5, 6);

$$LRsum(x, y) = I(x, y)$$
$$+ \frac{1}{3}(LRsum(x-1, y-1) * \mu^{DR}(x-1, y-1)$$
$$+ LRsum(x-1, y) * \mu^{R}(x-1, y) \tag{5}$$
$$+ LRsum(x-1, y+1) * \mu^{UR}(x-1, y+1))$$

$$RLsum(x, y) = I(x, y)$$
$$+ \frac{1}{3}(RLsum(x+1, y-1) * \mu^{DL}(x-1, y-1)$$
$$+ RLsum(x+1, y) * \mu^{L}(x+1, y) \tag{6}$$
$$+ RLsum(x+1, y+1) * \mu^{UL}(x+1, y+1))$$

wherein LRSum(x, y) defines left-to-right updated intensity value of pixel of concern (P(x, y)), I(x,y) defines original intensity of said pixel of concern (P(x, y)), LRSum(x-1, y-1) defines left-to-right updated intensity value of up left neighbouring pixel of pixel of concern (P(x-1, y-1)), $\mu^{DR}$(x-1, y-1) defines permeability of up left neighbouring pixel (P(x-1, y-1)) of pixel of concern (P(x, y)) in downward-right direction (DR), LRSum(x-1, y) defines left-to-right updated intensity value of left neighbouring pixel (P(x-1, y)) of pixel of concern (P(x, y)), $\mu^{R}$(x-1, y) defines permeability of left neighbouring pixel (P(x-1, y)) of pixel of concern (P(x, y)) in right direction (R), LRSum(x-1, y+1) defines left-to-right updated intensity value of down left neighbouring pixel (P(x-1, y+1)) of pixel of concern (P(x, y)), $\mu^{UR}$(x-1, y+1) defines permeability of down left neighbouring pixel (P(x-1, y+1)) of pixel of concern (P(x, y)) in upward-right direction (UR), RLSum(x, y) defines right-to-left updated intensity value of pixel of concern (P(x, y)), I(x, y) defines original intensity of said pixel of concern (P(x, y), RLSum(x+1, y-1) defines right-to-left updated intensity value of up right neighbouring pixel (P(x+1, y-1)) of pixel of concern (P(x, y)), $\mu^{DL}$(x+1, y-1) defines permeability of up right neighbouring pixel (P(x+1, y-1)) of pixel of concern (P(x, y)) in downward-left direction (DL), RLSum(x+1, y) defines right-to-left updated intensity value of right neighbouring pixel (P(x+1, y)) of pixel of concern (P(x, y)), $\mu^{L}$(x+1, y) defines permeability of right neighbouring pixel (P(x+1, y)) of pixel of concern (P(x, y)) in the left direction (L), RLSum(x+1, y+1) defines updated intensity value of down right neighbouring pixel (P(x+1, y+1)) of pixel of concern (P(x, y)) and $\mu^{UL}$(x+1, y+1) defines permeability of down right neighbouring pixel (P(x+1, y+1)) of pixel of concern (P(x, y)) in upward-left direction (UL);
calculating total horizontal updated intensity (HorSum(x, y)) for each pixel of concern (P(x, y)) of said image, using the formula (7);

$$HorSum(x, y) = LRsum(x, y) + RLsum(x, y) \tag{7}$$

- step of conducting a vertical update operation for each pixel of concern (P(x, y)) comprises the steps of;
Conducting a vertical update operation for each pixel of concern (P(x, y)) of said image using the equations (8, 9);

$$TBsum(x, y) = Horsum(x, y)$$
$$+ \frac{1}{3}(TBsum(x-1, y-1) * \mu^{DR}(x-1, y-1)$$
$$+ TBsum(x, y-1) * \mu^{D}(x, y-1) \tag{8}$$
$$+ TBsum(x+1, y-1) * \mu^{DL}(x+1, y-1))$$

$$BTsum(x, y) = Horsum(x, y)$$

$$+ \frac{1}{3}(BTsum(x-1, y+1) * \mu^{UR}(x-1, y+1)$$

$$+ BTsum(x, y+1) * \mu^{U}(x, y+1)$$

$$+ BTsum(x+1, y+1) * \mu^{UL}(x+1, y+1)) \qquad (9)$$

wherein TBsum(x, y) defines top-to-bottom updated intensity of pixel of concern (P(x, y)), TBsum(x-1, y-1) defines top-to-bottom updated intensity of up left neighbouring pixel (P(x-1, y-1)) of pixel of concern (P(x, y)), $\mu^{DR}$(x-1, y-1) defines permeability of up left neighbouring pixel (P(x-1, y-1)) of pixel of concern (P(x, y)) in downward right direction (DR), TBsum(x, y-1) defines top-to-bottom updated intensity of up neighbouring pixel (P(x, y-1)) of pixel of concern (P(x, y)), $\mu^{DR}$(x, y-1) defines permeability of up neighbouring pixel (P(x, y-1)) of pixel of concern (P(x, y)) in downward direction (D), TBsum(x+1, y-1) defines top-to-bottom updated intensity of up right neighbouring pixel (P(x+1, y-1)) of pixel of concern (P(x, y)), $\mu^{DR}$(x+1, y-1) defines permeability of up right neighbouring pixel (P(x-1, y-1)) of pixel of concern (P(x, y)) in downward left direction (DL), BTsum(x, y) defines bottom-to-top updated intensity of pixel of concern (P(x, y)), BTsum(x-1, y+1) defines bottom-to-top updated intensity of down left neighbouring pixel (P(x-1, y+1)) of pixel of concern (P(x, y)), $\mu^{UR}$(x-1, y+1) defines permeability of down left neighbouring pixel (P(x-1, y+1)) of pixel of concern (P(x, y)) in upward right direction (UR), BTsum(x, y-1) defines bottom-to-top updated intensity of down neighbouring pixel (P(x, y+1)) of pixel of concern (P(x, y)), $\mu^{U}$(x, y+1) defines permeability of down neighbouring pixel (P(x, y+1)) of pixel of concern (P(x, y)) in upward direction (U), BTsum(x+1, y+1) defines bottom-to-top updated intensity of down right neighbouring pixel (P(x+1, y+1)) of pixel of concern (P(x, y)) and $\mu^{UL}$(x+1, y+1) defines permeability of down right neighbouring pixel (P(x+1, y+1)) of pixel of concern (P(x, y)) in upward left direction (UL); Calculating total updated intensity (TotalSum(x, y)) for each pixel of concern (P(x, y)) of said image, using the formula (10);

$$TotalSum(x, y) = TBsum(x, y) + BTsum(x, y)$$

$$= PF(I(x, y)) \qquad (10)$$

• normalizing created permeability function (PF(I(x, y))) with total weights to obtain normalized intensity map of the image I$^F$(x, y);

- calculating centre - surround differences (CSD$^i$) by differencing two normalized intensity maps of the image (I$^F$(x, y)), which are calculated for different values of permeability adjustment constant ($\sigma$) and
- obtaining saliency map of the image (SM(x, y)) by summing all of the calculated centre surround differences (CSD$^i$(x, y)).

2. A saliency extraction method according to claim 1 wherein said step of normalizing created permeability function (PF(I(x, y))) is conducted using the equation (11);

$$I^F(x, y) = \frac{PF(I(x, y))}{PF(1(x, y))} \qquad (11)$$

wherein I$^F$(x, y) defines normalized intensity map of the image and PF(1 (x, y)) defines permeability function of the image intensities of all pixels of which are maximum.

3. A saliency extraction method according to claim 1 wherein centre - surround difference (CSD$^i$) is calculated using the equation (12);

$$CSD^i(x, y) = \left| I^F_{\sigma_i}(x, y) - I^F_{\sigma_{i+j}}(x, y) \right| \qquad (12)$$

wherein j is a positive integer and i varies between 1 and N -j.

4. A saliency extraction method according to claim 1 wherein said step of obtaining saliency map of the image (SM(x, y)) is done using the formula (13)

$$SM(x, y) = \sum_{i=1}^{N-J} CSD^i(x, y) \qquad (13)$$

wherein j is a positive integer and i varies between 1 and N - j.

5. A saliency extraction method according to claim 1 wherein said intensity ratio of neighbouring pixels is a predefined ratio.

**Patentansprüche**

1. **Salienz-Extraktionsverfahren** für ein Bild, welches zumindest ein Pixel (P(x, y)) von Belang und zumindest ein an das Pixel (P(x, y)) von Belang angrenzendes Pixel umfasst, **dadurch gekennzeichnet, dass** das Verfahren die Schritte umfasst;

- Erhalten einer normalisierten Intensitätskarte des Bildes $I^F$(x, y) des Bildes für aufeinanderfolgende N-Werte einer Permeabilitäts-Einstellungs-Konstanten ($\sigma_1$, $\sigma_2$, $\sigma_3$, ... , $\sigma_N$), wobei das Erhalten der normalisierten Intensitätskarte des Bildes $I^F$(x, y) die Schritte umfasst;

• Definieren eines Permeabilitäts-Werts ($\mu$) zwischen jeweils zwei angrenzenden Pixeln des Bildes, der umgekehrt proportional zu der Differenz von zumindest einem der Intensitätswerte der Pixel ist, wobei die Definition zumindest eine Permeabilitäts-Einstellungs-Konstante ($\sigma$), die unabhängig von den Intensitätswerten ist, umfasst, wobei die Permeabilität ($\mu$) zwischen zwei Pixeln ($P_1$, $P_2$) durch der Gleichung (4) berechnet wird

$$\mu = \min(e^{-\Delta R/\sigma}, e^{-\Delta G/\sigma}, e^{-\Delta B/\sigma}) \qquad (4)$$

worin min() die Minimum-Funktion definiert, $\Delta R$, $\Delta G$ und $\Delta B$ die Rot-Intensitätsdifferenz, Grün-Intensitätsdifferenz und Blau-Intensitätsdifferenz der beiden Pixel ($P_1$, $P_2$) definiert, die durch den Gleichungen (1 bis 3) berechnet werden

$$\Delta R = | R(P_1) - R(P_2) | \qquad (1)$$

$$\Delta G = | G(P_1) - G(P_2) | \qquad (2)$$

$$\Delta B = | B(P_1) - B(P_2) | \qquad (3)$$

worin $R(P_1)$ und $R(P_2)$ Rot-Intensitäten, $G(P_1)$ und $G(P_2)$ Grün-Intensitäten und $B(P_1)$ und $B(P_2)$ Blau-Intensitäten der jeweiligen beiden Pixel ($P_1$, $P_2$) definiert;
• Erzeugen einer Permeabilitätsfunktion (PF(I(x, y))) des Bildes durch Erhöhen der Intensität von jedem Pixel (P(x, y)) von Belang um ein Verhältnis der Intensität der angrenzenden Pixel mal die Permeabilität ($\mu$) des an das Pixel (P(x, y)) von Belang angrenzenden Pixels, wobei das Erzeugen einer Permeabilitätsfunktion (PF(I(x, y))) die Schritte der Durchführung einer horizontalen Aktualisierungsoperation für alle Pixel (P(x, y)) von Belang und der Durchführung einer vertikalen Aktualisierungsoperation für jedes Pixel (P(x, y)) von Belang umfasst und wobei

- der Schritt der Durchführung einer horizontalen Aktualisierungsoperation für alle Pixel (P(x, y)) von Belang die Schritte umfasst; Durchführen einer horizontalen Aktualisierungsoperation für alle Pixel (P(x, y)) von Belang des Bildes durch die Gleichungen (5, 6);

$$LRsum(x, y) = I(x, y)$$
$$+ \frac{1}{3}(LRsum(x-1, y-1) * \mu^{DR}(x-1, y-1)$$
$$+ LRsum(x-1, y) * \mu^{R}(x-1, y) \qquad (5)$$
$$+ LRsum(x-1, y+1) * \mu^{UR}(x-1, y+1))$$

$$RLsum(x, y) = I(x, y)$$
$$+ \frac{1}{3}(RLsum(x+1, y-1) * \mu^{DL}(x-1, y-1)$$
$$+ RLsum(x+1, y) * \mu^{L}(x+1, y) \qquad (6)$$
$$+ RLsum(x+1, y+1) * \mu^{UL}(x+1, y+1))$$

worin LRSum(x, y) den Links-nach-Rechts aktualisierten Intensitätswert der Pixel (P(x, y)) von Belang definiert, I(x,y) die ursprüngliche Intensität der Pixel (P(x, y)) von Belang definiert, LRSum(x-1, y-1) den Links-nach-Rechts aktualisierten Intensitätswert des oben links an das Pixel von Belang angrenzenden Pixels (P(x-1, y-1)) definiert, $\mu^{DR}$(x-1, y-1) die Permeabilität des oben links an das Pixel (P(x, y)) von Belang angrenzenden Pixels (P(x-1, y-1)) in Rechts-Unten-Richtung (DR) definiert, LRSum(x-1, y) den Links-nach-Rechts aktualisierten Intensitätswert des links an das Pixel (P(x, y)) von Belang angrenzenden Pixels (P(x-1, y)) definiert, $\mu^{R}$(x-1, y) die Permeabilität des links an das Pixel (P(x, y)) von Belang angrenzenden Pixels (P(x-1, y)) in Rechts-Richtung (R) definiert, LRSum(x-1, y+1) den Links-nach-Rechts aktualisierten Intensitätswert des unten links an das Pixel (P(x, y)) von Belang angrenzenden Pixels (P(x-1, y+1)) definiert, $\mu^{UR}$(x-1, y+1) die Permeabilität des unten links an das Pixel (P(x, y)) von Belang angrenzenden Pixels (P(x-1, y+1)) in Oben-Rechts-Richtung (UR) definiert, RLSum(x, y) den Rechts-nach-Links aktualisierten Intensitätswert des Pixels (P(x, y)) von Belang definiert, I(x, y) die ursprüngliche Intensität des Pixels (P(x, y)) von Belang definiert, RLSum(x+1, y-1) den Rechts-nach-Links aktualisierten Intensitätswert des oben rechts an das Pixel (P(x, y)) von Belang angrenzenden Pixels (P(x+1, y-1)) definiert, $\mu^{DL}$(x+1, y-1) die Permeabilität des oben rechts an das Pixel (P(x, y)) von Belang angrenzenden Pixels (P(x+1, y-1)) in Unten-Links-Richtung (DL) definiert, RLSum(x+1, y) den Rechts-nach-Links aktualisierten Intensitätswert des rechts an das Pixel (P(x, y)) von Belang angrenzenden Pixels (P(x+1, y)) definiert, $\mu^{L}$(x+1, y) die Permeabilität des rechts an das Pixel (P(x, y)) von Belang angrenzenden Pixels (P(x+1, y)) in Links-Richtung (L) definiert, RLSum(x+1, y+1) den aktualisierten Intensitätswert des unten rechts an das Pixel (P(x, y)) von Belang angrenzenden Pixels (P(x+1, y+1)) definiert und $\mu^{UL}$(x+1, y+1) die Permeabilität des unten rechts an das Pixel (P(x, y)) von Belang angrenzenden Pixels (P(x+1, y+1)) in Oben-Links-Richtung (UL) definiert;
Berechnen der gesamten horizontal aktualisierten Intensität (HorSum(x, y)) für jedes Pixel (P(x, y)) von Belang des Bildes mit der Gleichung (7);

$$HorSum(x, y) = LRsum(x, y) + RLsum(x, y) \qquad (7)$$

- der Schritt der Durchführung einer vertikalen Aktualisierungsoperation für alle Pixel (P(x, y)) von Belang die Schritte umfasst;
Durchführen einer vertikalen Aktualisierungsoperation für jedes Pixel (P(x, y)) von Belang des Bildes durch die Gleichungen (8, 9);

$$TBsum(x, y) = Horsum(x, y)$$
$$+ \frac{1}{3}(TBsum(x-1, y-1) * \mu^{DR}(x-1, y-1)$$
$$+ TBsum(x, y-1) * \mu^{D}(x, y-1)$$
$$+ TBsum(x+1, y-1) * \mu^{DL}(x+1, y-1)) \qquad (8)$$

$$BTsum(x, y) = Horsum(x, y)$$
$$+ \frac{1}{3}(BTsum(x-1, y+1) * \mu^{UR}(x-1, y+1)$$
$$+ BTsum(x, y+1) * \mu^{U}(x, y+1)$$
$$+ BTsum(x+1, y+1) * \mu^{UL}(x+1, y+1)) \qquad (9)$$

worin TBsum(x, y) die Oben-nach-Unten aktualisierte Intensität des Pixels (P(x, y)) von Belang definiert, TBsum(x-1, y-1) die Oben-nach-Unten aktualisierte Intensität des oben links an das Pixel (P(x, y)) von Belang angrenzenden Pixels (P(x-1, y-1)) definiert, $\mu^{DR}$(x-1, y-1) die Permeabilität des oben links an das Pixel (P(x, y)) von Belang angrenzenden Pixels (P(x-1, y-1)) in Unten-Rechts-Richtung (DR) definiert, TBsum(x, y-1) die Oben-nach-Unten aktualisierte Intensität des oben an das Pixel (P(x, y)) von Belang angrenzenden Pixels (P(x, y-1)) definiert, $\mu^{DR}$(x, y-1) die Permeabilität des oben an das Pixel (P(x, y)) von Belang angrenzenden Pixels (P(x, y-1)) in Unten-Richtung (D) definiert, TBsum(x+1, y-1) die Oben-nach-Unten aktualisierte Intensität des oben rechts an das Pixel (P(x, y)) von Belang angrenzenden Pixels (P(x+1, y-1)) definiert, $\mu^{DR}$(x+1, y-1) die Permeabilität des oben rechts an das Pixel (P(x, y)) von Belang angrenzenden Pixels (P(x+1, y-1)) in Unten-Links-Richtung (DL) definiert, BTsum(x, y) die Unten-nach-Oben aktualisierte Intensität des Pixels (P(x, y)) von Belang definiert, BTsum(x-1, y+1) die Unten-nach-Oben aktualisierte Intensität des unten links an das Pixel (P(x, y)) von Belang angrenzenden Pixels (P(x-1, y+1)) definiert, $\mu^{UR}$(x-1, y+1) die Permeabilität des unten links an das Pixel (P(x, y)) von Belang angrenzenden Pixels (P(x-1, y+1)) in Oben-Rechts-Richtung (UR) definiert, BTsum(x, y-1) die Unten-nach-Oben aktualisierte Intensität des unten an das Pixel (P(x, y)) von Belang angrenzenden Pixels (P(x, y+1)) definiert, $\mu^{U}$(x, y+1) die Permeabilität des unten an das Pixel (P(x, y)) von Belang angrenzenden Pixels(P(x, y+1)) in Oben-Richtung (U) definiert, BTsum(x+1, y+1) die Unten-nach-Oben aktualisierte Intensität des unten rechts an das Pixel (P(x, y)) von Belang angrenzenden Pixels (P(x+1, y+1)) definiert und $\mu^{UL}$(x+1, y+1) die Permeabilität des unten rechts an das Pixel (P(x, y)) von Belang angrenzenden Pixels (P(x+1, y+1)) in Oben-Links-Richtung (UL) definiert; Berechnen der gesamten aktualisierten Intensität (TotalSum(x, y)) für jedes Pixel (P(x, y)) von Belang des Bildes mit der Gleichung (10);

$$TotalSum(x, y) = TBsum(x, y) + BTsum(x, y)$$
$$= PF(I(x, y)) \qquad (10)$$

• Normalisieren der erzeugten Permeabilitätsfunktion (PF(I(x, y))) mit gesamter Gewichtung, um die normalisierte Intensitätskarte des Bildes $I^{F}$(x, y) zu erhalten;

- Berechnen von Zentrumumgebungsunterschieden (centre-surround differences, $CSD^{i}$) durch Differenzieren oder Differenzbildung von zwei normalisierten Intensitätskarten des Bildes ($I^{F}$(x, y)), die für verschiedene Werte der Permeabilitäts-Einstellungs-Konstanten ($\sigma$) berechnet werden und
- Erhalten einer Salienz-Karte des Bildes (SM(x, y)) durch Summieren aller berechneten Zentrumumgebungsunterschiede ($CSD^{i}$).

2. Salienz-Extraktionsverfahren nach Anspruch 1, wobei der Schritt des Normalisierens der erzeugten Permeabilitätsfunktion (PF(I(x, y))) durch Gleichung (11) durchgeführt wird;

$$I^F(x,y) = \frac{PF(I(x,y))}{PF(1(x,y))} \qquad (11)$$

worin $I^F(x, y)$ die normalisierte Intensitätskarte des Bildes definiert und $PF(1(x, y))$ die Permeabilitätsfunktion der Bildintensitäten aller Pixel, die maximal sind, definiert.

3. Salienz-Extraktionsverfahren nach Anspruch 1, wobei der Zentrumumgebungsunterschied (centre-surround differences, $CSD^i$) durch Gleichung (12) berechnet wird;

$$CSD^i(x,y) = \left| I^F_{\sigma_i}(x,y) - I^F_{\sigma_{i+j}}(x,y) \right| \qquad (12)$$

worin j eine positive ganze Zahl ist und i zwischen 1 und N-j variiert.

4. Salienz-Extraktionsverfahren nach Anspruch 1, wobei der Schritt des Erhaltens oder Erzeugens der Salienz-Karte des Bildes (SM(x, y)) durch Gleichung (13) durchgeführt wird;

$$SM(x,y) = \sum_{i=1}^{N-J} CSD^i(x,y) \qquad (13)$$

worin j eine positive ganze Zahl ist und i zwischen 1 und N-j variiert.

5. Salienz-Extraktionsverfahren nach Anspruch 1, wobei das Intensitätsverhältnis angrenzender Pixel ein vordefiniertes Verhältnis ist.

## Revendications

1. Procédé d'extraction de salience pour une image, qui comprend au moins un pixel d'intérêt (P(x, y)) et au moins un pixel voisin du pixel d'intérêt (P(x, y)), **caractérisé en ce que**, le procédé comprend les étapes consistant à ;

- obtenir une carte d'intensité normalisée de l'image $I^F(x, y)$ de ladite image pour N valeurs successives d'une constante d'ajustement de perméabilité ($\sigma_1$, $\sigma_2$, $\sigma_3$, ..., $\sigma_N$), dans lequel l'obtention d'une carte d'intensité normalisée de l'image $I^F(x, y)$ comprend les étapes consistant à ;

• définir une valeur de perméabilité ($\mu$) entre chaque deux pixels voisins de l'image, qui est inversement relative à la différence d'au moins une des valeurs d'intensité des pixels, dans lequel ladite définition comprend au moins une constante d'ajustement de perméabilité ($\sigma$) qui ne dépend pas desdites valeurs d'intensité, dans lequel la perméabilité ($\mu$) entre deux pixels ($P_1$, $P_2$) est calculée à l'aide de l'équation (4)

$$\mu = \min(e^{-\Delta R/\sigma}, e^{-\Delta G/\sigma}, e^{-\Delta B/\sigma}) \qquad (4)$$

dans laquelle min() définit la fonction minimum, $\Delta R$, $\Delta G$ et $\Delta B$ définissent la différence d'intensité du rouge, la différence d'intensité du vert et la différence d'intensité du bleu desdits deux pixels ($P_1$, $P_2$), qui sont calculées à l'aide des formules (1 à 3) ;

$$\Delta R = |R(P_1) - R(P_2)| \qquad (1)$$

$$\Delta G = | \, G(P_1) - G(P_2) \, | \tag{2}$$

$$\Delta B = | \, B(P_1) - B(P_2) \, | \tag{3}$$

- dans lesquelles $R(P_1)$ et $R(P_2)$ définissent les intensités de rouge, $G(P_1)$ et $G(P_2)$ pour les intensités de vert et $B(P_1)$ et $B(P_2)$ pour les intensités de bleu desdits deux pixels $(P_1, P_2)$ respectivement ;

• créer une fonction de perméabilité $(PF(I(x, y)))$ de l'image en augmentant l'intensité de chaque pixel d'intérêt $(P(x, y))$ par un rapport de l'intensité des pixels voisins fois la perméabilité $(\mu)$ du pixel voisin au pixel d'intérêt $(P(x, y))$ dans lequel l'étape de création d'une fonction de perméabilité $(PF(I(x, y)))$ comprend les étapes consistant à exécuter une opération de mise à jour horizontale pour tous les pixels d'intérêt $(P(x, y))$ et à exécuter une opération de mise à jour verticale pour chaque pixel d'intérêt $(P(x, y))$ et dans lequel

- l'étape d'exécution d'une opération de mise à jour horizontale pour tous les pixels d'intérêt $(P(x, y))$ comprend les étapes consistant à ;
  exécuter une opération de mise à jour horizontale pour tous les pixels d'intérêt $(P(x, y))$ de ladite image à l'aide des équations (5, 6) ;

$$
\begin{aligned}
LRsum(x, y) = {} & I(x, y) \\
& + \frac{1}{3}(LRsum(x-1, y-1) * \mu^{DR}(x-1, y-1) \\
& + LRsum(x-1, y) * \mu^{R}(x-1, y) \\
& + LRsum(x-1, y+1) * \mu^{UR}(x-1, y+1))
\end{aligned}
\tag{5}
$$

$$
\begin{aligned}
RLsum(x, y) = {} & I(x, y) \\
& + \frac{1}{3}(RLsum(x+1, y-1) * \mu^{DL}(x-1, y-1) \\
& + RLsum(x+1, y) * \mu^{L}(x+1, y) \\
& + RLsum(x+1, y+1) * \mu^{UL}(x+1, y+1))
\end{aligned}
\tag{6}
$$

dans lesquelles $LRSum(x, y)$ définit une valeur d'intensité mise à jour de gauche à droite du pixel d'intérêt $(P(x, y))$, $I(x,y)$ définit l'intensité d'origine dudit pixel d'intérêt $(P(x, y))$, $LRSum(x-1, y-1)$ définit une valeur d'intensité mise à jour de gauche à droite du pixel voisin en haut à gauche du pixel d'intérêt $(P(x-1, y-1))$, $\mu^{DR}(x-1, y-1)$ définit la perméabilité du pixel voisin en haut à gauche $(P(x-1, y-1))$ du pixel d'intérêt $(P(x, y))$ dans le sens en bas à droite (DR), $LRSum(x-1, y)$ définit une valeur d'intensité mise à jour de gauche à droite du pixel voisin gauche $(P(x-1, y))$ du pixel d'intérêt $(P(x, y))$, $\mu^{R}(x-1, y)$ définit la perméabilité du pixel voisin gauche $(P(x-1, y))$ du pixel d'intérêt $(P(x, y))$ vers la droite (R), $LRSum(x-1, y+1)$ définit une valeur d'intensité mise à jour de gauche à droite du pixel voisin en bas à gauche $(P(x-1, y+1))$ du pixel d'intérêt $(P(x, y))$, $\mu^{UR}(x-1, y+1)$ définit la perméabilité du pixel voisin en bas à gauche $(P(x-1, y+1))$ du pixel d'intérêt $(P(x, y))$ dans le sens en haut à droite (UR), $RLSum(x, y)$ définit une valeur d'intensité mise à jour de droite à gauche du pixel d'intérêt $(P(x, y))$, $I(x, y)$ définit une intensité d'origine dudit pixel d'intérêt $(P(x, y))$, $RLSum(x+1, y-1)$ définit une valeur d'intensité mise à jour de droite à gauche du pixel voisin en haut à droite $(P(x+1, y-1))$ du pixel d'intérêt $(P(x, y))$, $\mu^{DL}(x+1, y-1)$ définit la perméabilité du pixel voisin en haut à droite $(P(x+1, y-1))$ du pixel d'intérêt $(P(x, y))$ dans le sens en bas à gauche (DL), $RLSum(x+1, y)$ définit une valeur d'intensité mise à jour de droite à gauche du pixel voisin droit $(P(x+1, y))$ du pixel d'intérêt $(P(x, y))$, $\mu^{L}(x+1, y)$ définit la perméabilité du pixel voisin droit $(P(x+1, y))$ du pixel d'intérêt $(P(x, y))$ vers la gauche (L), $RLSum(x+1, y+1)$ définit une valeur d'intensité mise à jour du pixel voisin en bas à droite $(P(x+1, y+1))$ du pixel d'intérêt $(P(x, y))$ et $\mu^{UL}(x+1, y+1)$ définit la perméabilité du pixel voisin en bas à droite $(P(x+1, y+1))$ du pixel d'intérêt $(P(x, y))$ dans le sens en haut à gauche (UL) ;

calculer l'intensité mise à jour horizontale totale (HorSum(x, y)) pour chaque pixel d'intérêt (P(x, y)) de ladite image, à l'aide de la formule (7) ;

$$HorSum(x, y) = LRsum(x, y) + RLsum(x, y) \qquad (7)$$

- une étape d'exécution d'une opération de mise à jour verticale pour chaque pixel d'intérêt (P(x, y)) comprend les étapes consistant à ;

Exécuter une opération de mise à jour verticale pour chaque pixel d'intérêt (P(x, y)) de ladite image à l'aide des équations (8, 9) ;

$$
\begin{aligned}
TBsum(x, y) = {} & Horsum(x, y) \\
& + \frac{1}{3}(TBsum(x-1, y-1) * \mu^{DR}(x-1, y-1) \\
& + TBsum(x, y-1) * \mu^{D}(x, y-1) \\
& + TBsum(x+1, y-1) * \mu^{DL}(x+1, y-1))
\end{aligned}
\qquad (8)
$$

$$
\begin{aligned}
BTsum(x, y) = {} & Horsum(x, y) \\
& + \frac{1}{3}(BTsum(x-1, y+1) * \mu^{UR}(x-1, y+1) \\
& + BTsum(x, y+1) * \mu^{U}(x, y+1) \\
& + BTsum(x+1, y+1) * \mu^{UL}(x+1, y+1))
\end{aligned}
\qquad (9)
$$

dans lesquelles TBSum(x, y) définit une intensité mise à jour de haut en bas du pixel d'intérêt (P(x, y)), TBsum(x-1, y-1) définit l'intensité mise à jour de haut en bas du pixel voisin en haut à gauche (P(x-1, y-1)) du pixel d'intérêt (P(x, y)), $\mu^{DR}$(x-1, y-1) définit la perméabilité du pixel voisin en haut à gauche (P(x-1, y-1)) du pixel d'intérêt (P(x, y)) en bas à droite (DR), TBSum(x, y-1) définit l'intensité mise à jour de haut en bas du pixel voisin en haut (P(x, y-1)) du pixel d'intérêt (P(x, y)), $\mu^{DR}$(x, y-1) définit la perméabilité du pixel voisin en haut (P(x, y-1)) du pixel d'intérêt (P(x, y)) vers le bas (D), TBsum(x+1, y-1) définit l'intensité mise à jour de haut en bas du pixel voisin en haut à droite (P(x+1, y-1)) du pixel d'intérêt (P(x, y)), $\mu^{DR}$(x+1, y-1) définit la perméabilité du pixel voisin en haut à droite (P(x-1, y-1)) du pixel d'intérêt (P(x, y)) dans le sens en bas à gauche (DL), BTsum(x, y) définit l'intensité mise à jour de bas en haut du pixel d'intérêt (P(x, y)), BTsum(x-1, y+1) définit l'intensité mise à jour de bas en haut du pixel voisin en bas à gauche (P(x-1, y+1)) du pixel d'intérêt (P(x, y)), $\mu^{UR}$(x-1, y+1) définit la perméabilité du pixel voisin en bas à gauche (P(x-1, y+1)) du pixel d'intérêt (P(x, y)) dans le sens en haut à droite (UR), BTsum(x, y-1) définit l'intensité mise à jour de bas en haut du pixel voisin en bas (P(x, y+1)) du pixel d'intérêt (P(x, y)), $\mu^{u}$(x, y+1) définit la perméabilité du pixel voisin en bas (P(x, y+1)) du pixel d'intérêt (P(x, y)) vers le haut (U), BTsum(x+1, y+1) définit l'intensité mise à jour de bas en haut du pixel voisin en bas à droite (P(x+1, y+1)) du pixel d'intérêt (P(x, y)) et $\mu^{UL}$(x+1, y+1) définit la perméabilité du pixel voisin en bas à droite (P(x+1, y+1)) du pixel d'intérêt (P(x, y)) dans le sens en haut à gauche (UL) ;

Calculer l'intensité mise à jour totale (TotalSum(x, y)) pour chaque pixel d'intérêt (P(x, y)) de ladite image, à l'aide de la formule (10) ;

$$
\begin{aligned}
TotalSum(x, y) &= TBsum(x, y) + BTsum(x, y) \\
&= PF(I(x, y))
\end{aligned}
\qquad (10)
$$

- normaliser la fonction de perméabilité (PF(I(x, y))) créée avec des pondérations totales pour obtenir une carte d'intensité normalisée de l'image $I^{F}$(x, y) ;

- calculer les différences centre - entourage (CSD[i]) en différenciant deux cartes d'intensité normalisées de l'image (I[F](x, y)), qui sont calculées pour différentes valeurs de constante d'ajustement de perméabilité ($\sigma$) et
- obtenir une carte de salience de l'image (SM(x, y)) en additionnant toutes les différences centre - entourage calculées (CSD[i](x, y)).

2. Procédé d'extraction de salience selon la revendication 1 dans lequel ladite étape de normalisation de la fonction de perméabilité créée (PF(I(x, y))) est exécutée à l'aide de l'équation (11) ;

$$I^{F}(x,y) = \frac{PF(I(x,y))}{PF(1(x,y))} \tag{11}$$

dans laquelle I[F](x, y) définit la carte d'intensité normalisée de l'image et PF(1(x, y)) définit la fonction de perméabilité des intensités d'image dont tous les pixels sont le maximum.

3. Procédé d'extraction de salience selon la revendication 1 dans lequel la différence centre - entourage (CSD[i]) est calculée à l'aide de l'équation (12) ;

$$CSD^{i}(x,y) = \left| I^{F}_{\sigma_{i}}(x,y) - I^{F}_{\sigma_{i+j}}(x,y) \right| \tag{12}$$

dans laquelle j est un nombre entier positif et i varie entre 1 et N - j.

4. Procédé d'extraction de salience selon la revendication 1 dans lequel ladite étape d'obtention de la carte de salience de l'image (SM(x, y) est exécutée à l'aide de la formule (13);

$$SM(x,y) = \sum_{i=1}^{N-J} CSD^{i}(x,y) \tag{13}$$

dans laquelle j est un nombre entier positif et i varie entre 1 et N - j.

5. Procédé d'extraction de salience selon la revendication 1 dans lequel ledit rapport d'intensité de pixels voisins est un rapport prédéfini.

LR

TB

| P(x-1, y-1) | P(x, y-1) | P(x+1, y-1) |
| | (D) | |
| | (DR) (DL) | |
| P(x-1, y) → (R) | P(x, y) (L) | ← P(x+1, y) |
| | (UR) (U) (UL) | |
| P(x-1, y+1) | P(x, y+1) | P(x+1, y+1) |

BT

RL

Figure 1

P(x-1, y-1)

(DR)

P(x-1, y)

P(x, y)

(R)

P(x-1, y+1)

(UR)

Figure 2

(DL)

P(x+1, y-1)

P(x+1, y)

P(x, y)

(UL)

(L)

P(x+1, y+1)

Figure 3

Figure 4

Figure 5

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008304742 A1

**Non-patent literature cited in the description**

- Real-time saliency-aware video abstraction'',THE VISUAL COMPUTER. **HANLI ZHAO et al.** INTERNATIONAL JOURNAL OF COMPUTER GRAPHICS. SPRINGER, 15 January 2009, vol. 25, 973-984